(19) Europäisches Patentamt / European Patent Office / Office européen des brevets

(11) **EP 2 512 675 B1**

(12) **EUROPEAN PATENT SPECIFICATION**

(45) Date of publication and mention of the grant of the patent:
**18.07.2018   Bulletin 2018/29**

(21) Application number: **10793029.9**

(22) Date of filing: **13.12.2010**

(51) Int Cl.:
**B01L 3/00** *(2006.01)*

(86) International application number:
**PCT/GB2010/052074**

(87) International publication number:
**WO 2011/073643 (23.06.2011 Gazette 2011/25)**

(54) **MICROFLUIDICS APPARATUS AND METHODS**

MIKROFLUIDISCHE VORRICHTUNG UND VERFAHREN

APPAREIL MICROFLUIDIQUE ET PROCÉDÉS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2009   GB 0921840**

(43) Date of publication of application:
**24.10.2012   Bulletin 2012/43**

(73) Proprietor: **Camtech Management Pte Ltd 159349 (SG)**

(72) Inventor: **MENG-HAN, Kuok Cambridgeshire CB24 3AZ (GB)**

(74) Representative: **Martin, Philip John Marks & Clerk LLP 62-68 Hills Road Cambridge CB2 1LA (GB)**

(56) References cited:
WO-A1-2007/107910    WO-A1-2009/112537
US-A- 5 858 192    US-A1- 2002 139 674
US-A1- 2003 047 456    US-A1- 2004 178 068

• YANG ET AL: "Electrical/electrochemical impedance for rapid detection of foodborne pathogenic bacteria", BIOTECHNOLOGY ADVANCES, ELSEVIER PUBLISHING, BARKING, GB, vol. 26, no. 2, 12 November 2007 (2007-11-12), pages 135-150, XP022426821, ISSN: 0734-9750, DOI: DOI:10.1016/J.BIOTECHADV.2007.10.003

**Description**

FIELD OF THE INVENTION

This invention relates to microfluidics apparatus and methods for particle concentration in particular for sensor applications for sensing biological entities such as cells, spores and the like.

BACKGROUND TO THE INVENTION

There is a continuing need for improvements to microfluidic devices, in particular for biological so-called lab-on-chip applications. Such a device may comprise, for example, a section for generating biological material to be analysed, a section for manipulating the biological material, and a sensing section to sense the results, all integrated within a single device. Here we are particularly concerned with sensing biological particles such as spores, cells and similar entities. Various prior art sensing techniques are known including that described in US6,352,838, in which a dielectrophoretic force is employed to selectively separate a target material from a contaminant material; and that described in US2007/0175755 (which employs a fluid flow generally aligned with a longitudinal axis of a fluid containing cell).

The most relevant prior art is in US5,858,192. Further background prior art can be found in: WO2009/112537; WO2007/107910; US2003/047456; US2002/139674; and Yang et al., "Electrical/electrochemical impedance for rapid detection of foodborne pathogenic bacteria", Biotechology Advances, Elsevier, vol 26(2), 12 Nov 2007, pages 135-150, ISSN: 0734-9750.

SUMMARY OF THE INVENTION

According to the invention there is provided a microfluidic sensor for sensing biological particles including a particle concentration device for performing concentration of particles in three dimensions, the sensor device comprising: a substrate which defines a lateral plane of said sensor, said substrate bearing a microfluidic channel or chamber for carrying a conductive fluid bearing said biological particles for concentration, wherein said channel has: upper and lower surfaces spaced apart in said direction perpendicular to said lateral plane, said upper surface being further from said substrate than said lower surface, and first and second electrodes spaced apart on said channel or chamber for defining an electric field therebetween; and a sensing surface on an inner surface of said channel or chamber for contact with said fluid to selectively sense said biological particles; wherein said particle concentration device comprises means for applying an ac voltage across said electrodes to perform simultaneously: i) electrohydrodynamic generation of a convection current flow in said fluid; and ii) 3D concentration of said particles in said fluid by dielectrophoretic attraction or repulsion of said biological particles to or from a region of increased electric field generated by said ac voltage across said electrodes; whereby said convection current flow and said 3D concentration increase a concentration of said biological particles towards said sensing surface of said sensor, characterised wherein: one or both of said electrodes is disposed on said upper surface, and said sensing surface is opposite said electrode, and wherein in use, said biological particles circulate past said sensing surface and concentrate in three dimensions in a direction perpendicular to said lateral plane adjacent to said sensing surface.

In some preferred embodiments of the apparatus the sensing circuit is either adjacent to or opposite an electrode. For example in one arrangement a pair of electrodes is located on one side of the microfluidic channel or chamber and the sensing surface is located on the opposite side of the channel or chamber so that convective circulation may be driven by the AC voltage to sweep the particles past the sensing surface. Where the electrodes are located on the same side of the channel or chamber a gap between the electrodes may be approximately the same as the distance from the side of the channel or chamber bearing electrodes to the opposite side of the channel or chamber bearing the sensing surface (+/- about 50% tolerance). In such an arrangement the width of an electrode may also be approximately the same as this distance (again to within approximately +/- 50%). In plan view the electrodes may define a plurality of configurations according to the application, for example a serpentine or interdigitated electrode array.

In embodiments the particles have a mean maximum dimension of at least 0.5 $\mu$m, more particularly a mean maximum dimension in a range 0.5 $\mu$m to 200 $\mu$m. Thus in embodiments the particles comprise relatively large entities such as cells or spores. In other embodiments a particle may comprise a droplet of oil in an aqueous fluid (emulsion), the droplet of oil comprising a biological entity. Broadly speaking the microfluidic channel dimensions and electrodimensions may be chosen in proportion to the size of the particles and may, in embodiments be of order 10 $\mu$m - 500 $\mu$m, for example around 50 - 100 $\mu$m.

In preferred embodiments the particle concentration device concentrates particles adjacent the sensing surface but, as described in more detail below, particles may also be concentrated away from the sensing surface if these, in effect, are a distractor from a target to be sensed.

Any of a range of different sensing surfaces may be employed, including but not limited to, a polymer membrane (which includes, in embodiments, a hologram) a plasmon-based sensor, a surface acoustic wave-based sensor and other types of sensor with which the skilled person will be familiar. Examples of holographic polymer sensors are described, for example, in: WO2004/081624. An antibody-antigen reaction is employed to selectively bind the target.

In some preferred embodiments of the device the means for applying the AC voltage comprises means to apply a voltage at a frequency of greater than 100KHz, preferably greater than 1MHz. As described further below, in embodiments the driving frequency is chosen (in conjunction with the conductivity of the fluid) such that particles experience a dielectrophoretic (DEP) force arising from induced polarisation of a particle in the electric field, as well as convective flow arising from an electrohydrodynamic (EHD) force, broadly speaking an electrothermal force on a double layer adjacent an electrode which results in a convective flow of the fluid. In embodiments use of an AC voltage, though not essential, reduces the risk of bubble generation due to excessive heating, and peeling off of the thermal layer.

In embodiments the conductive fluid comprises water including a salt or buffer, for example potassium chloride, and is thus sufficiently conductive for the EHD effect to induce a convective flow. The presence of the DEP effect and whether this is attractive (attracting a particle towards a high electric field region) or repulsive depends upon a combination of the conductivity of the fluid and the frequency of the applied AC voltage: at higher electrical conductivities (for example greater than 20-30 mS/m) a high frequency may be repulsive and a low frequency attractive whereas at lower conductivities (for example less than 20 mS/m) a low AC frequency may be repulsive and a high frequency attractive. (In embodiments the fluid has a conductivity of greater than 1 mS/m or preferably greater than 10 mS/m). Depending upon the physical configuration of the device particles may either be pushed away from or drawn towards the electrodes, more particularly an edge or corner of an electrode (where the field is highest), and this may be used to draw particles away from or encourage particles towards a sensing surface. In some particularly preferred embodiments the particles are concentrated near the electrodes by selecting the AC voltage which provides an attractive force and then swept towards the sensing surface by a convective flow generated by EHD, so that a combination of both DEP and EHD is employed to perform particle concentration in three dimensions. In embodiments the AC voltage applied may be of order 10V.

In the context of this specification the reference to three dimensional concentration refers to concentration in the Z-dimension or thickness of a microfluidic device, for example in a lab-on-a-chip, that is in a third dimension rather than in a lateral plane (or rather than only in a lateral plane). Thus the substrate defines a lateral plane and the particle concentration device is configured to concentrate said particles in a direction perpendicular to said lateral plane. More particularly the channel or chamber has upper and lower surfaces spaced apart in said direction perpendicular to said lateral plane, said upper surface being further from said substrate than said lower surface, and one or both of said electrodes is disposed on or adjacent said upper surface.

In still further embodiments of the above described techniques the sensing surface comprises a sensing surface with an optically detectable sensing reaction, for example a sensing hologram, and the sensing surface is provided over one of the electrodes and the electrode is arranged to be substantially transparent. For example >5%, 10%, 50% or 80% transmissive a sensing wavelength in the range of 300 nm to 1900 nm, more particularly 400 nm to 1600 nm. In this way the sensing surface is in contact with the fluid in the device but still visible through the electrode (and wall of the channel/chamber) and thus may be optically interrogated from outside the microfluidic device, for example by means of a laser, light emitting diode or other light source. The transparent electrodes may comprise a suitably thin layer of metal, or ITO (Indium Tin Oxide) or a similar material.

We also describe (not falling under the scope of the claims) a microfluidic sensor for sensing biological particles including a particle concentration device for performing concentration of particles in three dimensions, the sensor device comprising: a substrate bearing a microfluidic channel or chamber for carrying a conductive fluid bearing said particles for concentration, wherein said channel has: first and second electrodes spaced apart on said channel or chamber for defining an electric field therebetween; and a sensing surface on an inner surface of said channel or chamber for contact with said fluid to selectively sense said particles; and wherein said particle concentration device comprises means for applying an ac voltage across said electrodes to flow said particles past said sensing surface and to concentrate said particles in three dimensions adjacent to or away from said sensing surface; and wherein said sensing surface is configured to provide an optically detectable sensing reaction, wherein said sensing surface is provided over one of said electrodes, and wherein said one of said electrodes is substantially transparent.

BRIEF DESCRIPTION OF THE DRAWINGS

These and other aspects of the invention will now be further described, by way of example only, with reference to the accompanying figures in which:

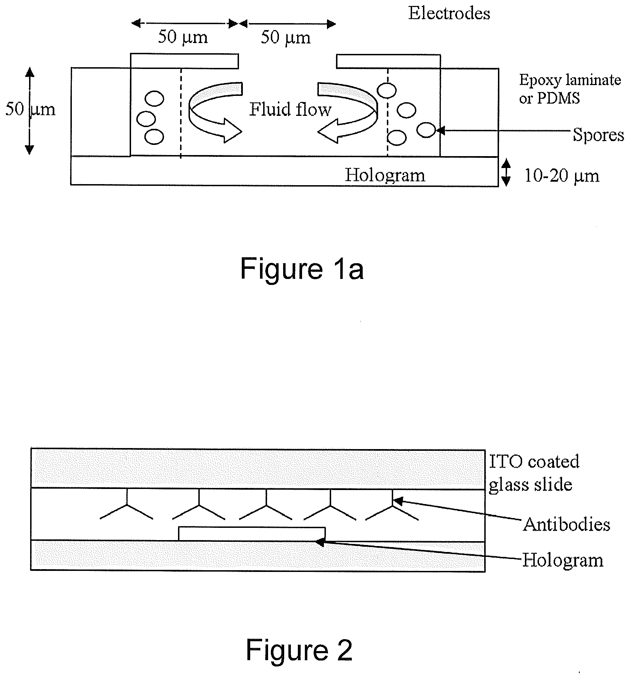

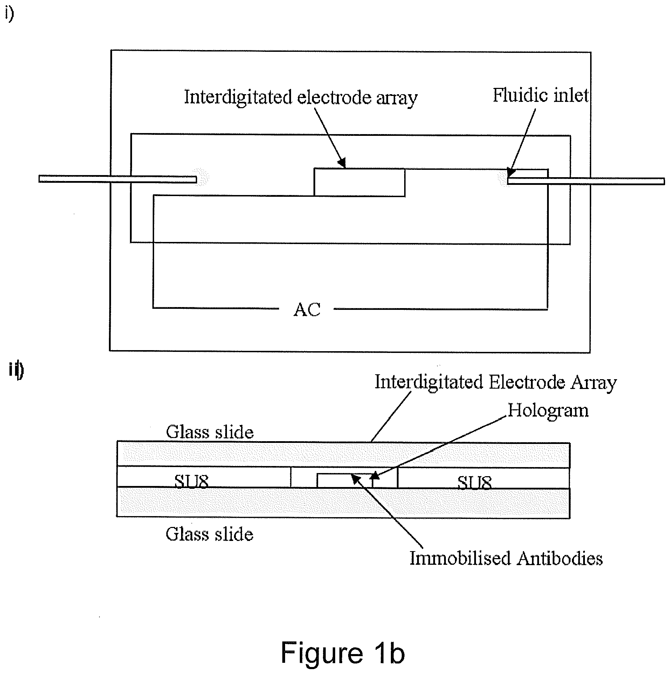

Figure 1a shows a side view of an example of a sensor in combination with a spore concentration chamber, according to an embodiment of an aspect of the invention, more particularly a side view of a spore concentration chamber design, with height 50$\mu$m, on top of hologram, (hologram thickness varies between 10-20$\mu$m); Figure 1b shows a more detailed example of the Figure 1a device;

Figure 2 shows a layout of antibody immobilisation within a capture and detection chamber;

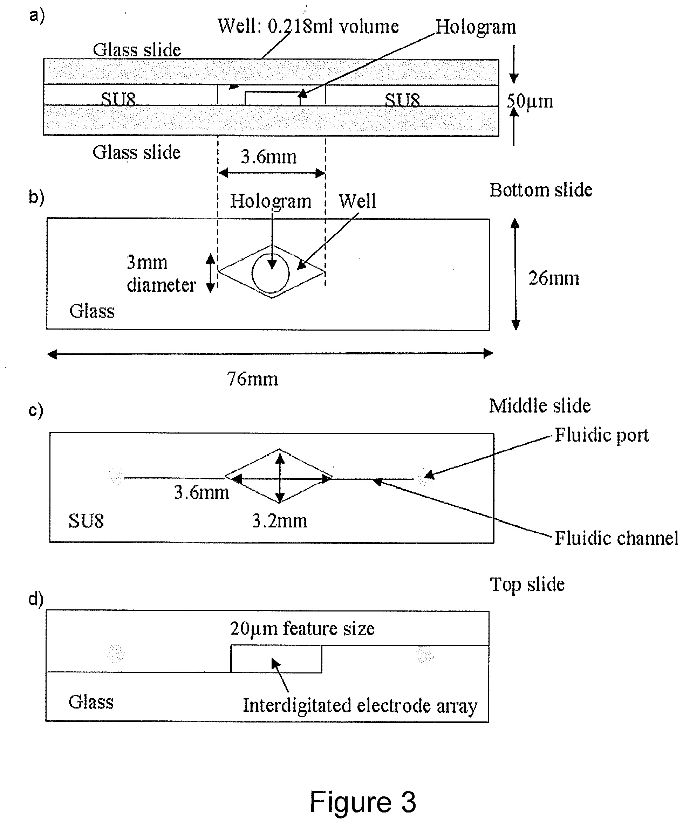

Figure 3 shows a design of the fluidic capture-culture device showing (a) cross-section; (b) top view of bottom layer of fluidic device; (c) top view of middle layer of fluidic device with cutout section; (d) top view of top layer of fluidic device with electrode array, (diagram not to scale); and

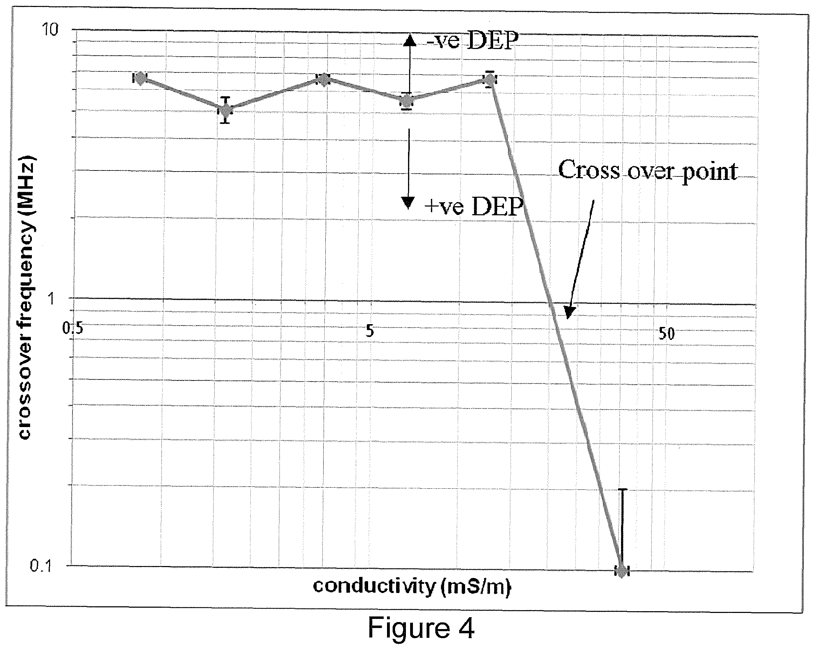

Figure 4 shows a graph of cross-over frequency against fluid conductivity for DEP attraction/repulsion from a high field region, more particularly a measurement of crossover frequency of *B megaterium* QM B1551 spores. (AC voltage was applied to castellated electrodes; where error bars are not visible they lie within the data point).

DETAILED DESCRIPTION OF PREFERRED EMBODIMENTS

**Design of spore concentration, capture and detection chamber**

The main component of such a lab-on-chip device is the chamber in which DEP concentration, followed by antibody capture and then holographic detection is carried out. We carry out spore concentration using a combination of electrohydrodynamic (EHD) effects and DEP forces. A design to accommodate the two principles is embodied within the device shown schematically in Figure 1a.

Figure 1a shows the spore concentration chamber which integrates the electrodes and the hologram. The resulting flow of fluid due to the EHD effect from the electrode array is circular, and the diameter of the circular rotation is on the same scale as the electrode dimensions ($50\mu m$). The layout of electrodes was considered as either an interdigitated array or a castellated array.

The spores in suspension are pushed down towards the hologram surface by a combination of negative DEP and EHD effects. Negative DEP acts to repel spores from the top electrodes, while the electroosmostic force acts to create a circular current of spores within the liquid volume and deposits the spores in the area corresponding to the middle of the electrodes - shown by the dotted lines in Figure 1a. This circular flow arises due to the presence of an electrothermal gradient in the liquid adjacent to the electrodes. At the same time, the gravity effect will also result in spores drifting downwards towards the hologram surface. An alternative layout in which the hologram is fabricated on top of the electrode surface and spores are pulled down by positive DEP was also considered. However the combination of electrodes with the polymer hydrogel would give rise to some complications. The holographic signal would not be as visible, if a gold electrode is used, and the charge on the electrode may have an effect on the swelling or contraction of the hologram.

A layer of SU8 epoxy laminate in between the electrodes and hologram is used to define the chamber height to $50\mu m$. It also seals the spore concentration chamber and prevents rapid drying of the spore suspension.

Alternative configurations are the construction of the hologram on conductive indium tin oxide (ITO) or gold coated glass slides, or the construction of a hologram on a conductive gold ring fabricated on glass. Holograms were successfully fabricated onto a standard sized ITO coated glass slide, and a 6mm diameter hologram was fabricated on top of a gold ring electrode. However, peeling off of the hydrogel occurred during the application of positive or negative charge to the ITO surface or gold electrodes (even with the use of thiolated gold), or after an extended period of time (~1 month) as adhesion was not as robust as on the glass surface. In addition, the exposure of the hologram was difficult because of the reflectivity of gold.

High frequency (~20MHz) and conductivity (>12.5mS/m))were used to facilitate a large negative DEP force. The dimensions of electrodes were chosen as the DEP and EHD effects occur on the length-scale of the electrodes. The electrodes were also chosen to be within 1 order of magnitude of the size of the spores.

Figure 1b shows i) a top view and ii) a side view of a 3 layer fluidic device, with an interdigitated electrode array connected to AC supply. 100nm thick platinum electrodes were fabricated onto glass slide via a 10nm thick titanium adhesion layer to form interdigitated electrode array with $40\mu m$ electrode separation.

Following spore concentration, antibody capture of spores would take place on the surface of the hologram. Figure 2 shows a layout for antibody immobilisation to take place.

Antibodies may be immobilised in between electrodes, on electrodes (in the case of ITO electrodes) or onto the polymer hydrogel surface of the hologram. Antibody capture could be carried out concurrently with the application of electric charge, or during an incubation period after the application of charge. As shown in Figure 1a, spores may be deposited in the area corresponding to the middle of the electrodes. Hence, it would potentially achieve the highest capture yield to carry out antibody capture in this area. Following antibody capture, spore germination would be initiated and holographic detection takes place.

**Device assembly and packaging**

The proposed design is for the construction of a three layer fluidic device:
The first layer consists of a 6mm diameter poly{HEMA-coEDMA(6mol%)-co-MAA(5mol%)} hologram fabricated on a glass slide.

A second PDMS layer with an area cut out to the shape of a parallelogram and height of $50\mu m$ is used to form the concentration chamber (allowing sufficient height for the hologram thickness). Alternatively, a photoresist epoxy SU8 (MicroChem Corp, Newton, MA) is fabricated on the lower slide containing the hologram to a height of $50\mu m$ (fabrication by spin coating followed by heating at 200°C for 30min for adhesion to glass to take place).

The third layer consists of a glass slide or epoxy layer on which the castellated electrode array is patterned out of either platinum or indium tin oxide electrodes.

The three layer assembly is then either held in place by pressure using a clamp, or glued on permanently with epoxy adhesive.

The total cavity volume is calculated to be 0.218ml, (assuming that the hologram volume within the cavity is 0.07ml based on a hologram thickness of 10μm). Sample and germination wash would be introduced to the fluid cavity by means of the fluidic port. However, the liquid would be static during the operation of the device with antibody capture and holographic detection. The design layout of the fluidic device is shown in Figure 3: Figure 3 shows a design of the fluidic capture-culture device (a) cross-section; (b) top view of bottom layer of fluidic device; (c) top view of middle layer of fluidic device with cutout section; (d) top view of top layer of fluidic device with electrode array, (diagram not to scale).

This design incorporates dielectrophoresis as well as antibody capture in a single device. Antibody capture is not necessary for spore cell concentration, however it may be useful for integration with holograms, as spores can then be captured directly on the hologram surface for increased sensitivity of detection. It would also add another layer of specificity.

A simplified model of the final system has been used in which capture and germination is carried out without any fluid flow, with a starting volume in the μl range.

**Characterisation of dielectrophoretic (DEP) behaviour of *B. megaterium* QMB 1551 spores**

Although the dielectric properties of cells such as yeast have been well characterised, the dielectrophoretic properties of spores have not been characterised. Hence it was desirable to carry out characterisation of *B. megaterium* QMB 1551 spores prior to dielectrophoretic capture. This was done by visually monitoring the response of *B. megaterium* QMB 1551 spores to changes in the frequency of the applied electric field.

Figure 4 shows the measurement of crossover frequency (at which DEP force=0) at each conductivity value corresponding to the frequency at which the DEP force is zero - negative DEP occurs at frequencies above the plotted line, while positive DEP occurs at frequencies below the plotted line.

In the DEP force equation

$$F_{DEP} = 2\pi R^3 \varepsilon_m \{Re[K(w)]\}\Delta E^2$$

Where E is the electric field, R is the particle radius, $\varepsilon_m$ is the absolute dielectric permittivity of the fluid, and K(w) is the Clausius-Mossotti function (broadly, the polarisability of the particle relative ot the fluid as a function of frequency, w).

Applications of embodiments of the invention include, but are not limited to for detection of spore germination, for example using a combination of antibody capture, *in-situ* germination and holographic detection. Immobilised antibodies for capture, electrodes for dielectrophoretic (DEP) manipulation of spores, polymer holograms and fluidic channels may be integrated within a single device.

No doubt many other effective alternatives will occur to the skilled person. It will be understood that the invention is not limited to the described embodiments and encompasses modifications apparent to those skilled in the art lying within the scope of the claims appended hereto.

**Claims**

1. A microfluidic sensor for sensing biological particles including a particle concentration device for performing concentration of particles in three dimensions, the sensor device comprising:

   a substrate which defines a lateral plane of said sensor,
   said substrate bearing a microfluidic channel or chamber for carrying a conductive fluid bearing said biological particles for concentration, wherein said channel has:

   upper and lower surfaces spaced apart in said direction perpendicular to said lateral plane, said upper surface being further from said substrate than said lower surface, and first and second electrodes spaced apart on said channel or chamber for defining an electric field therebetween; and
   a sensing surface on an inner surface of said channel or chamber for contact with said fluid to selectively sense said biological particles;

   wherein said particle concentration device comprises means for applying an ac voltage across said electrodes to perform simultaneously:

   i) electrohydrodynamic generation of a convection current flow in said fluid; and
   ii) 3D concentration of said particles in said fluid by dielectrophoretic attraction or repulsion of said biological particles to or from a region of increased electric field generated by said ac voltage across said electrodes;

   whereby said convection current flow and said 3D concentration increase a concentration of said biological particles towards said sensing surface of said sensor,
<u>characterised wherein</u>:

- one or both of said electrodes is disposed on said upper surface and
- said sensing surface is opposite said electrode,

and wherein in use, said biological particles circulate past said sensing surface and concentrate in three dimensions in a direction perpendicular to said lateral plane adjacent to said sensing surface.

2. A microfluidic sensor as claimed in claim 1 wherein said electrodes are disposed on the same side of said channel or chamber and wherein a gap between said electrodes is the same as a distance from a said electrode to said sensing surface, to within 50% of said distance from a said electrode to said sensing surface.

3. A microfluidic sensor as claimed in claim 1 or 2 wherein said particles have a mean maximum dimension in the range of 0.5 to 200 $\mu$m.

4. A microfluidic sensor as claimed in claim 3 wherein said fluid is an aqueous fluid and wherein a said particle comprises a droplet of oil in said aqueous fluid, said droplet of oil including a biological entity.

5. A microfluidic sensor as claimed in any preceding claim wherein said sensing surface comprises a polymer sensing surface configured to provide an antibody/antigen-based surface sensing reaction.

6. A microfluidic sensor as claimed in any preceding claim wherein said means for applying said ac voltage comprises means to apply a said voltage at a frequency of greater than 100KHz, preferably greater than 1 MHz.

7. A microfluidic sensor as claimed in any preceding claim wherein said sensing surface is configured to provide an optically detectable sensing reaction, wherein said sensing surface is provided over one of said electrodes, and wherein said one of said electrodes is substantially transparent.

8. A microfluidic sensor as claimed in any preceding claim wherein said sensing surface comprises a hologram.

**Patentansprüche**

1. Mikrofluidischer Sensor zum Erfassen von biologischen Partikeln, umfassend eine Partikelkonzentrierungsvorrichtung zum Ausführen einer Konzentrierung der Partikeln in drei Dimensionen, wobei der Sensor umfasst:

ein Substrat, welches eine seitliche Ebene des Sensors definiert,
wobei das Substrat zum Konzentrieren einen mikrofluidischen Kanal oder eine mikrofluidische Kammer zum Führen eines leitfähigen Fluids trägt, welches die biologischen Partikeln enthält, wobei der Kanal folgendes aufweist:

eine obere und untere Fläche, welche in einer zur seitlichen Ebene senkrechten Richtung beabstandet sind, wobei die obere Fläche vom Substrat weiter entfernt ist als die untere Fläche, und eine erste und zweite Elektrode, welche auf dem Kanal oder auf der Kammer zum Definieren eines dazwischenliegenden elektrischen Feldes beabstandet sind; und
eine Erfassungsfläche auf einer inneren Fläche des Kanals oder der Kammer, zum Kontaktieren des Fluids, um die biologischen Partikeln selektiv zu erfassen;

wobei die Partikelkonzentrierungsvorrichtung Mittel zum Anwenden einer Wechselspannung über die Elektroden umfasst, um gleichzeitig folgendes auszuführen:

i) elektrodynamische Erzeugung einer konvektiven Strömung im Fluid; und
ii) 3D-Konzentrieren der Partikeln im Fluid durch dielektrophoretische Anziehung oder Abstoßung der biologischen Partikeln zu oder von einem Bereich eines verstärkten elektrischen Feldes, welches durch die Wechselspannung über die Elektroden erzeugt wird;

wodurch die konvektive Strömung und das 3D-Konzentrieren die Konzentration der biologischen Partikeln zur Erfassungsfläche des Sensors hin erhöhen,
**dadurch gekennzeichnet, dass**:

- eine oder beide Elektroden auf der oberen Fläche angeordnet sind und
- die Erfassungsfläche der Elektrode gegenübersteht,

und wobei, im Betrieb, die biologischen Partikeln über die Erfassungsfläche hinaus zirkulieren und sich in drei Dimensionen in einer Richtung konzentrieren, welche zur seitlichen Ebene an der Erfassungsfläche anliegend senkrecht ist.

**2.** Mikrofluidischer Sensor nach Anspruch 1, wobei die Elektroden auf derselben Seite des Kanals oder der Kammer angeordnet sind und wobei ein Spalt zwischen den Elektroden dem Abstand zwischen einer Elektrode und der Erfassungsfläche entspricht, bis auf innerhalb von 50% des Abstands von einer Elektrode zur Erfassungsfläche.

**3.** Mikrofluidischer Sensor nach Anspruch 1 oder 2, wobei die Partikeln eine durchschnittliche maximale Größe im Bereich zwischen 0,5 und 200 μm aufweisen.

**4.** Mikrofluidischer Sensor nach Anspruch 3, wobei das Fluid ein wässriges Fluid ist und wobei die Partikel ein Tröpfchen Öl im wässrigen Fluid umfasst, wobei das Tröpfchen Öl eine biologische Einheit umfasst.

**5.** Mikrofluidischer Sensor nach einem der vorstehenden Ansprüche, wobei die Erfassungsfläche eine polymere Erfassungsfläche umfasst, welche konfiguriert ist, um eine Antikörper/Antigen-basierte Flächenerfassungsreaktion bereitzustellen.

**6.** Mikrofluidischer Sensor nach einem der vorstehenden Ansprüche, wobei die Mittel zum Anwenden der Wechselspannung Mittel zum Anwenden der Spannung bei einer Frequenz umfassen, welche größer als 100 kHz, vorzugsweise größer als 1 MHz ist.

**7.** Mikrofluidischer Sensor nach einem der vorstehenden Ansprüche, wobei die Erfassungsfläche konfiguriert ist, um eine optisch nachweisbare Erfassungsreaktion bereitzustellen, wobei die Erfassungsfläche über eine der Elektroden bereitgestellt ist, und wobei die eine der Elektroden im Wesentlichen transparent ist.

**8.** Mikrofluidischer Sensor nach einem der vorstehenden Ansprüche, wobei die Erfassungsfläche ein Hologramm umfasst.

**Revendications**

**1.** Capteur microfluidique pour détecter des particules biologiques, incluant un dispositif de concentration de particules pour réaliser une concentration de particules en trois dimensions, le dispositif de capteur comprenant :

un substrat qui définit un plan latéral dudit capteur ;
ledit substrat étant porteur d'un canal ou d'une chambre microfluidique pour transporter un fluide conducteur qui est porteur desdites particules biologiques dans le but de leur concentration, dans lequel ledit canal comporte :

des surfaces supérieure et inférieure qui sont espacées dans ladite direction qui est perpendiculaire audit plan latéral, ladite surface supérieure étant plus éloignée dudit substrat que ladite surface inférieure, et des première et seconde électrodes qui sont espacées sur ledit canal ou ladite chambre pour définir un champ électrique entre elles ; et
une surface de détection sur une surface interne dudit canal ou de ladite chambre pour une entrée en contact avec ledit fluide afin de détecter de façon sélective lesdites particules biologiques ;

dans lequel ledit dispositif de concentration de particules comprend un moyen pour appliquer une tension alternative AC entre lesdites électrodes de manière à réaliser simultanément :

i) la génération électrohydrodynamique d'une circulation de courant de convection dans ledit fluide ; et
ii) une concentration 3D desdites particules dans ledit fluide par attraction ou répulsion diélectrophorétique desdites particules biologiques sur ou par rapport à une région qui présente un champ électrique augmenté qui est généré par ladite tension alternative AC entre lesdites électrodes ;

d'où il résulte que ladite circulation de courant de convection et ladite concentration 3D augmentent la concentration desdites particules biologiques en direction de ladite surface de détection dudit capteur ;
**caractérisé en ce que** :

- l'une desdites électrodes ou les deux est/sont disposée(s) sur ladite surface supérieure ; et
- ladite surface de détection est opposée à ladite électrode ;

et dans lequel, en utilisation, lesdites particules biologiques circulent au-delà de ladite surface de détection et se concentrent en trois dimensions dans une direction qui est perpendiculaire audit plan latéral en une position qui est adjacente à ladite surface de détection.

**2.** Capteur microfluidique tel que revendiqué selon la revendication 1, dans lequel lesdites électrodes sont disposées sur le même côté dudit canal ou de ladite chambre et dans lequel un espace entre lesdites électrodes est le même qu'une distance depuis une dite électrode jusqu'à ladite surface de détection, à l'intérieur de 50 % de ladite distance depuis une dite électrode jusqu'à ladite surface de détection.

3. Capteur microfluidique tel que revendiqué selon la revendication 1 ou 2, dans lequel lesdites particules présentent une dimension maximum moyenne dans la plage de 0,5 à 200 $\mu$m.

4. Capteur microfluidique tel que revendiqué selon la revendication 3, dans lequel ledit fluide est un fluide aqueux et dans lequel une dite particule comprend une gouttelette d'huile dans ledit fluide aqueux, ladite gouttelette d'huile incluant une entité biologique.

5. Capteur microfluidique tel que revendiqué selon l'une quelconque des revendications qui précèdent, dans lequel ladite surface de détection comprend une surface de détection en polymère qui est configurée de manière à assurer une réaction de détection de surface basée sur anticorps/antigène.

6. Capteur microfluidique tel que revendiqué selon l'une quelconque des revendications qui précèdent, dans lequel ledit moyen pour appliquer ladite tension alternative AC comprend un moyen pour appliquer une dite tension à une fréquence supérieure à 100 kHz, de préférence supérieure à 1 MHz.

7. Capteur microfluidique tel que revendiquée selon l'une quelconque des revendications qui précèdent, dans lequel ladite surface de détection est configurée de manière à assurer une réaction de détection détectable optiquement, dans lequel ladite surface de détection est prévue au-dessus de l'une desdites électrodes, et dans lequel ladite une desdites électrodes est sensiblement transparente.

8. Capteur microfluidique tel que revendiqué selon l'une quelconque des revendications qui précèdent, dans lequel ladite surface de détection comprend un hologramme.

**Figure 1a**

**Figure 2**

i)

ii)

Figure 1b

Figure 3

Figure 4

EP 2 512 675 B1

**EP 2 512 675 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6352838 B
- US 20070175755 A
- US 5858192 A
- WO 2009112537 A
- WO 2007107910 A
- US 2003047456 A
- US 2002139674 A
- WO 2004081624 A

### Non-patent literature cited in the description

- Electrical/electrochemical impedance for rapid detection of foodborne pathogenic bacteria. **YANG et al.** Biotechology Advances. Elsevier, 12 November 2007, vol. 26, 135-150